# EUROPÄISCHE PATENTSCHRIFT

(11) **EP 1 070 006 B1**
(45) Veröffentlichungstag und Bekanntmachung des Hinweises auf die Patenterteilung: **13.03.2002**
(21) Anmeldenummer: 99920606.3
(22) Anmeldetag: 07.04.1999
(51) Int. Cl.: B60T 7/04, B60T 17/22

(54) **VORRICHTUNG ZUR BREMSDRUCKREGELUNG**
DEVICE FOR REGULATING BRAKE PRESSURE
DISPOSITIF DE REGULATION DE LA PRESSION DE FREINAGE

(30) Priorität: 09.04.1998 DE 19816011; 12.06.1998 DE 19826346
(43) Veröffentlichungstag der Anmeldung: 24.01.2001
(73) Patentinhaber: Continental Teves AG & Co. oHG, 60488 Frankfurt am Main (DE)
(72) Erfinder: FEIGEL, Hans-Jörg, D-61191 Rosbach (DE)
(86) Internationale Anmeldenummer: EP9902351
(87) Internationale Veröffentlichungsnummer: WO9952756

(56) Entgegenhaltungen:
- DE-A- 3 445 566
- DE-A- 19 538 794
- DE-A- 19 603 863
- GB-A- 2 292 590
- GB-A- 2 309 759

## Beschreibung

Die Erfindung betrifft eine Vorrichtung zur Bremsdruckregelung gemäß Oberbegriff des Anspruchs 1.

Eine Vorrichtung dieser Art ist in der DE 35 45 566 A1 beschrieben. Sie umfaßt u.a. einen aus Federelementen aufgebauten Wegsimulator und eine Druckversorgungseinrichtung mit einem Gummimembran-Druckspeicher. Bei derartigen Gummimembranen diffundiert mit der Zeit das Gas in die Bremsflüssigkeit. Bei Ausfall der Druckversorgungseinrichtung, kann die gesamte Bremsanlage unbrauchbar werden, weil das Volumen des Hauptbremszylinders zum Komprimieren des in Druckflüssigkeit enthaltenen Gases nicht ausreicht. Bei intakter Bremsanlage kann das in die Bremskreise gelangte Gas durch den Fahrer nicht festgestellt werden, da das Pedalgefühl wegen des Einsatzes des Wegsimulaters unverändert bleibt.

Es besteht somit die Aufgabe, die Betriebssicherheit der bekannten Vorrichtung zu verbessern, eine hinsichtlich Pedalkomfort optimale Bremskraftverstärkung zu erreichen und einen komfortablen, fahrerunabhängigen Bremseingriff über eine elektrische bzw. elektronische Regeleinrichtung zu ermöglichen. Dabei soll außerdem eine Überwachung der Funktionssicherheit der Bremsanlage durch elektrische bzw. elektronische Ermittlung des Entlüftungszustandes durchführbar sein.

Diese Aufgabe wird durch die Kombination der kennzeichnenden Merkmale des Anspruchs 1 in Verbindung mit den einleitend genannten gattungsbildenden Merkmalen gelöst.

Vorteilhafte Ausgestaltungen und Weiterbildungen des Erfindungsgedankens sind in den Unteransprüchen 2 bis 20 beschrieben.

Bei der erfindungsgemäßen Vorrichtung wird im Normalbremsfall das gesamte Druckmittel, das für die Bremsung erforderlich ist, über die Beaufschlagung der Bremskolben von der Druckversorgungseinrichtung zur Verfügung gestellt. Die Bremskolben werden dabei als Sperre zwischen dem Druckmittel im eigentlichen Bremskreislauf und dem ggf. gasbeladenen Druckmittel in der Druckversorgungseinrichtung benutzt. Umfangreiche Versuche haben gezeigt, daß eine direkte Beaufschlagung der Bremszylinder aus der Druckversorgungseinrichtung nur für kurzzeitige ABS-Bremsungen zulässig ist, weil anderenfalls die Bremswirkung wegen unzureichender Entlüftung beeinträchtigt sein kann.

Die erfindungsgemäße Vorrichtung hat den weiteren Vorteil, daß die Signale der Meßwertgeber dazu benutzt werden können, den Entlüftungszustand der Bremsanlage zu kontrollieren. Eine kombinierte Auswertung der Meßwerte erlaubt es im Vergleich mit abgespeicherten Sollwerten bzw. Kennlinien oder Kennlinienfeldern auf den Zustand der Anlage zu schließen und ggf. ein Warnsignal auszulösen.

Mit der erfindungsgemäßen Vorrichtung läßt sich demnach nicht nur das Eindringen von Gas in den eigentlichen Bremskreislauf besser verhindern, sondern auch eine selbstätige Überwachung des Entlüftungszustandes und eine Fehleranzeige realisieren.

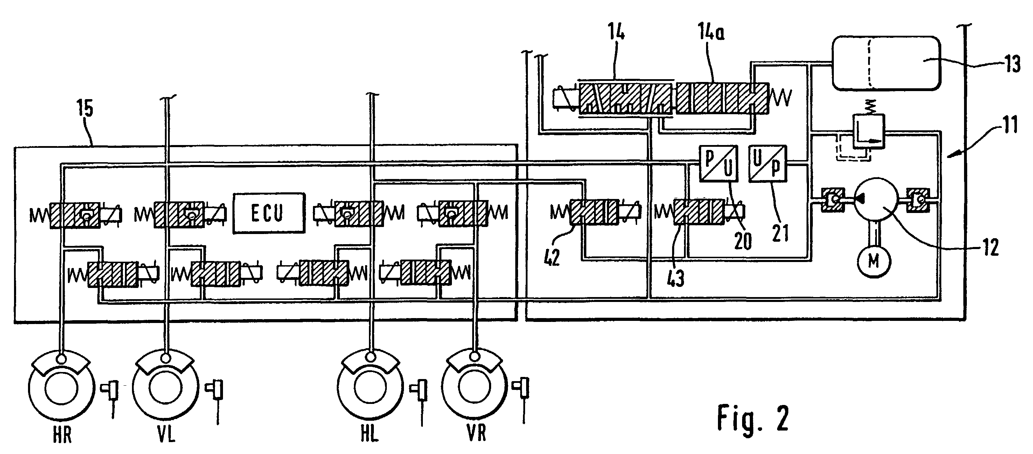

Weitere Einzelheiten werden anhand der in den Figuren 1 bis 4 dargestellten Ausführungsbeispielen näher erläutert. Es zeigen:
- Figur 1: eine erste Ausführungsform der Vorrichtung mit einem Schaltschema für den Bremskreislauf und für die Druckversorgungseinrichtung,
- Figur 2: eine Abwandlung des Schaltschemas von Figur 1,
- Figur 3: eine zweite Ausführungsform der erfindungsgemäßen Vorrichtung,
- Figur 4: eine dritte Ausführungsform der erfindungsgemäßen Vorrichtung.

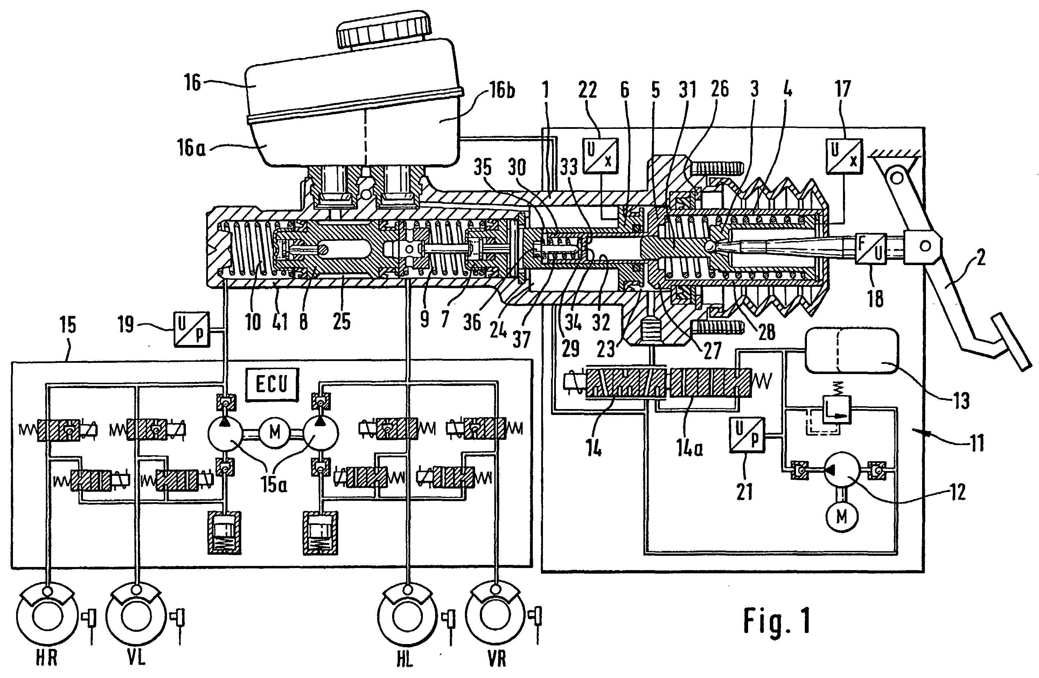

Die Vorrichtung gemäß Figur 1 umfaßt als Hauptbaugruppen einen Bremskraftverstärker, einen Tandemhauptzylinder, eine Druckversorgungseinrichtung und einen Ventilblock für die Beaufschlagung der Radbremszylinder. Dabei sind die Gehäuse 1 und 41 für den Bremskraftverstärker und für den Tandemhauptzylinder einteilig ausgebildet und die Bremskolben 7 und 8 und die mit dem Bremspedal 2 mechanisch gekoppelte Betätigungseinrichtung 3 axial fluchtend zueinander angeordnet. Die Betätigungseinrichtung 3 wirkt über eine Simulatorfeder 4 auf ein Widerlager 5, das seinerseits bei einem Ausfall der Druckversorgung über einen Kolben 6 direkt die als Tandem angeordneten Bremszylinder 7 und 8 verschieben kann.

In umgekehrter Richtung wirken die Rückstellfedern 9 und 10 der Bremskolben 7 und 8 über den Kolben 6 auf das Widerlager 5, das in der Ausgangsstellung gegen einen im Gehäuse 1 ausgebildeten Anschlag 26 angedrückt wird. Das als Widerlager 5 bezeichnete Bauteil besteht aus einem Basisteil 27, einem hohlzylindrischen Teil 28 und einem kolbenartigen Teil 29, der seinerseits in einen hohlzylindrischen Teil 30 des Kolbens 60 eingreift und einen hohlzylindrischen Teil 32 aufweist, der durch eine Wand 33 unterteilt ist.

In den bremspedalseitigen Teil des hohlzylindrischen Teils 32 greift ein kolbenförmiger Fortsatz 31 der Betätigungseinrichtung 3 ein, während im bremskolbenseitigen Teil des hohlzylindrischen Teils 32 eine Drosseleinrichtung ausgebildet ist, die eine Drosselbohrung 34 in der Wand 33, eine Drosselbohrung 35 im hohlzylindrischen Teil 30 des Kolbens 6 und ein durch eine Feder 37 vorgespanntes Schließglied 36 für die Drosselbohrung 34 umfaßt. Diese Drosseleinrichtung hat den Zweck, das Ansprechverhalten des Bremskraftverstärkers zu verbessern.

Die Druckversorgungseinrichtung 11 umfaßt eine motorbetriebene Pumpe 12, einen Druckspeicher 13 und ein Steuerventil 14 mit vorgeschaltetem 2/2-Ventil 14a. Sie ist über einen Anschluß mit einen im Gehäuse 1 zwischen Widerlager 5 und Kolben 6 ausgebildeten Raum 23 verbunden.

über dem Hauptbremszylinder 41 ist ein Vorratsbehälter für das Druckmittel angeordnet, der in zwei Kammern 16a und 16b unterteilt ist. Die linke Kammer 16a ist mit einem zwischen dem Bremskolben 8 und dem Hauptbremszylinder 41 ausgebildeten Raum 25 verbunden, während die rechte Kammer 16b über eine Zuflußbohrung mit einem zwischen Gehäuse 1 und Kolben 6 ausgebildetem Raum 24 verbunden ist.

Der Ventilblock 15 entspricht dem einer üblichen Bremsanlage. Er enthält eine motorbetriebene Pumpe 15a zur Realisierung von ABS-, ASR- und anderen Funktionen.

Außerdem umfaßt die in figur 1 dargestellte Ausführungsform des Erfindungsgedankens noch
- einen Meßwertgeber 17 zur Erzeugung eines Wegsignals für die Betätigungseinrichtung 3,
- einen Meßwertgeber 18 zur Erzeugung eines Wegsignals für das Bremspedal 2,
- einen Meßwertgeber 22 zur Erzeugung eines Wegsignals für den Kolben 6,
- einen Meßwertgeber 21 zur Erzeugung eines Drucksignals für die Druckversorgungseinrichtung 11 und
- einen Meßwertgeber 19 zur Erzeugung eines Drucksignals für den Ventilblock 15.

Bei der Ausführungsform gemäß 2 sind gegenüber Figur 1 nur die Druckversorgungseinrichtung 11 und der Ventilblock 15 geändert worden. Im Ventilblock 15 ist die Pumpe 15a weggelassen worden. Die Beaufschlagung mit Druckmittel erfolgt stattdessen über die Ventile 42 und 43 aus der Druckversorgungseinrichtung 11. Der Meßwertgeber 20 entspricht dem Meßwertgeber 19 aus Figur 1 und erzeugt ein dem Druck im Ventilblock 15 entsprechendes Signal.

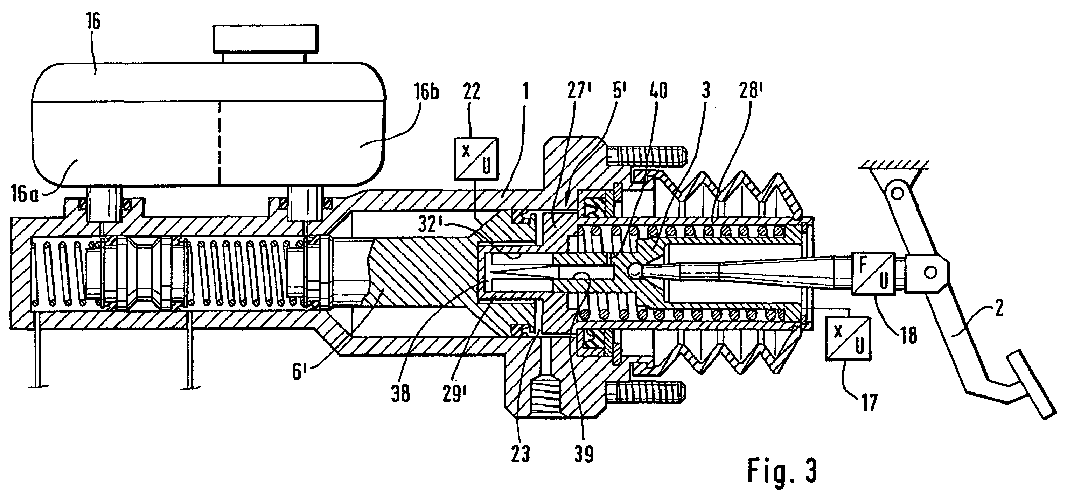

Die Ausführungsform gemäß Figur 3 wird nur insoweit beschrieben, als sie sich von Figur 1 unterscheidet. Das Widerlager 5' umfaßt einen Basisteil 27', einen hohlzylindrischen Teil 28' und einen kolbenartigen Teil 29', der seinerseits einen hohlzylindrischen Teil 32' aufweist. Die Drosseleinrichtung besteht aus einem Drosselglied 38 mit einem kolbenförmigen Ansatz, einer Bohrung 39 und einer Drosselbohrung 40 im bremskolbenseitigen Teil der Betätigungseinrichtung 3. Auch der Kolben 6' und die Bremskolben 7' und 8' sind gegenüber der Ausführungsform gemäß Figur 1 konstruktiv abgewandelt. Die Bremskolben 7' und 8' sind durch Rückstellfedern 9' und 10' in die Ausgangslage vorgespannt.

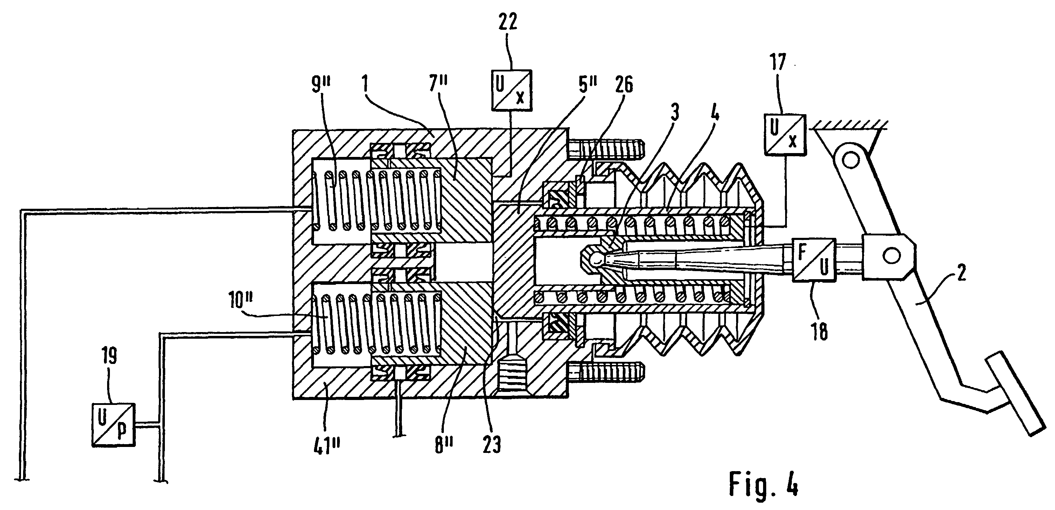

Figur 4 zeigt eine konstruktiv abgewandelte Bauform 5" des Widerlagers, die für in einem Hauptbremszylinder 41" nebeneinander angeordnete Bremskolben 7" und 8" einsetzbar ist. Die Bremskolben 7" und 8" sind durch Rückstellfedern 9" und 10" in die Ausgangsstellung vorgespannt.

### Bezugszeichenliste:

- 1: Gehäuse
- 2: Bremspedal
- 3: Betätigungseinrichtung
- 4: Simulator
- 4, 5',5": Widerlager
- 6, 6': Kolben
- 7, 7', 7": Bremskolben
- 8, 8', 8": Bremskolben
- 9, 9', 9": Rückstellfeder
- 10, 10', 10": Rückstellfeder
- 11: Druckversorgungseinrichtung
- 12: Pumpe
- 13: Druckspeicher
- 14: Steuerventil
- 14a: 2/2-Ventil
- 15: Ventilblock
- 15a: Pumpe
- 16: Vorratsbehälter
- 17: Meßwertgeber
- 18: Meßwertgeber
- 19: Meßwertgeber
- 20: Meßwertgeber
- 21: Meßwertgeber
- 22: Meßwertgeber
- 23: Raum
- 24: Raum
- 25: Raum
- 26: Anschlag
- 27, 27': Basisteil
- 28, 28': hohlzylindrischer Teil
- 29, 29': kolbenartiger Teil
- 30: hohlzylindrischer Teil
- 31, 31': kolbenförmiger Fortsatz
- 32, 32': hohlzylindrischer Teil
- 33: wand
- 34: Drosselbohrung
- 35: Drosselbohrung
- 36: Schließglied
- 37: Feder
- 38: Drosselglied
- 39: Bohrung
- 40: Drosselbohrung
- 41, 41', 41": Hauptbremszylinder
- 42: Ventil
- 43: Ventil

## Patentansprüche

1. Vorrichtung zur Bremsdruckregelung in hydraulischen Bremsanlagen von Fahrzeugen, umfassend
- ein Gehäuse (1), in dem ein axial verschiebliches Widerlager (5, 5', 5") für eine Simulatorfeder (4) einer mit einem Bremspedal (2) mechanisch gekoppelten Betätigungseinrichtung (3) angeordnet ist, das in seiner Ausgangsposition an einem im Gehäuse (1) ausgebildeten Anschlag (26) anliegt,
- einen, wenigstens einen Bremskolben (7, 8, 7', 8', 7", 8") aufweisenden Hauptbremszylinder (41),
- eine Druckversorgungseinrichtung (11) mit motorbetriebener Pumpe (12), Druckspeicher (13) und Steuerventil (14),
- einen drucklosen Vorratsbehälter (16) für das hydraulische Druckmittel einschließlich aller erforderlichen Verbindungsleitungen und
- eine elektrische oder elektronische Regeleinrichtung,
**dadurch gekennzeichnet,**
**daß** die Simulatorfeder (4) zwischen dem Widerlager (5, 5', 5") und der Betätigungseinrichtung (3) angeordnet ist,
- wenigstens je ein Meßwertgeber
(17, 18) für die Relativbewegung zwischen Betätigungseinrichtung (3) und Widerlager (5, 5', 5") und/oder für die in die Simulatorfeder (4) eingeleitete Pedalkraft,
(22) für die Position eines Bremkolbens (7, 8, 7', 8', 7", 8") und
(19, 20) für den Druck im Bremskreis oder zwischen Steuerungsventil (14) und Gehäuse (1)
vorgesehen ist und daß
das von der Druckversorgungseinrichtung (11) über das Steuerventil (14) fließende hydraulische Druckmittel ausschließlich in einen Raum (23) des Gehäuses (1) eingespeist wird, wo es einerseits das Widerlager (5, 5', 5") gegen den Anschlag (26) drückt und andererseits wenigstens einen Bremskolben (7, 8, 7', 8', 7", 8") mit Druck beaufschlagt.

2. Vorrichtung nach Anspruch 1, **dadurch gekennzeichnet, daß** außerdem ein Meßwertgeber (21) für den Betriebsdruck der Druckversorgungseinrichtung (11) vorgesehen ist.

3. Vorrichtung nach Anspruch 1 oder 2, **dadurch gekennzeichnet, daß** das hydraulische Druckmittel in Abhängigkeit von dem Wegsignal des Meßwertgebers (22) eingespeist wird.

4. Vorrichtung nach Anspruch 1 oder 2, **dadurch gekennzeichnet, daß** hydraulische Druckmittel in Abhängigkeit von einem Kraftsignal eingespeist wird.

5. Vorrichtung nach Anspruch 1 oder 2, **dadurch gekennzeichnet, daß** das hydraulische Druckmittel in Abhängigkeit von einem elektronischen Signal eingespeist wird, das von einem äußeren Abstandssensor, einem Lenkwinkelsensor, einem Querbeschleunigungssensor, einem Gierratensensor und/oder einem anderen Beschleunigungssensor erzeugt wird.

6. Vorrichtung nach einem der Ansprüche 1 oder 2, **dadurch gekennzeichnet, daß** das hydraulische Druckmittel in Abhängigkeit von einer Kombination der in den Ansprüchen 3 bis 5 genannten Signale eingespeist wird.

7. Vorrichtung nach einem der Ansprüche 1 bis 6, **dadurch gekennzeichnet, daß** außerdem ein Ventilblock (15) mit einer motorbetriebenen Pumpe (15 a) zur Realisierung von ABS-, ASR- oder anderen Funktionen vorgesehen ist.

8. Vorrichtung nach Anspruch 7, jedoch mit der Maßgabe, daß der Ventilblock (15) ohne motorbetriebene Pumpe ausgebildet ist und daß das zur Realisierung der genannten Funktionen erforderliche Druckmittel von der Druckversorgungseinrichtung (11) über Ventile (42, 43) zur Verfügung gestellt wird.

9. Vorrichtung nach einem der Ansprüche 1 bis 8, **dadurch gekennzeichnet, daß** das Steuerventil (14) analog ansteuerbar ist und daß dem Steuerventil (14) ein 2/2-Ventil (14 a) vorgeschaltet ist.

10. Vorrichtung nach einem der Ansprüche 1 bis 9, **dadurch gekennzeichnet, daß** im Gehäuse (1) zwischen dem Widerlager (5) und dem Bremskolben (7, 8, 7', 8') ein Kolben (6, 6') angeordnet ist und daß zwischen dem Kolben (6, 6') und dem Bremskolben (7, 8, 7', 8') ein Nachlaufraum (24) ausgebildet ist, der mit dem drucklosen Vorratsbehälter (16) in Verbindung steht.

11. Vorrichtung nach Anspruch 10, **dadurch gekennzeichnet, daß** der Bremskolben ein Tandemkolben (7, 8, 7', 8') ist.

12. Vorrichtung nach einem der Ansprüche 1 bis 9, **dadurch gekennzeichnet, daß** der Raum (23) des Gehäuses (1) axial durch das Widerlager (5') und direkt durch wenigstens einen axial verschieblichen Bremskolben (7", 8") begrenzt ist, wobei der Bremskolben (7,8') bei Ausfall der Druckversorgungseinrichtung direkt vom Widerlager (5) beaufschlagbar ist.

13. Vorrichtung nach Anspruch 12, **dadurch gekennzeichnet, daß** zwei Bremskolben (7", 8") parallel nebeneinander angeordnet sind.

14. Vorrichtung nach einem der Ansprüche 1 bis 13, **dadurch gekennzeichnet, daß** das Widerlager (5, 5', 5") bei nichtbetätigtem Bremspedal (2) von wenigstens einer Rückstellfeder (9, 10, 9', 10', 9", 10") des bzw. der Bremskolben (7, 8, 7', 8', 7", 8") gegen einen gehäusefesten Anschlag (26) angedrückt wird.

15. Vorrichtung nach Anspruch 10 oder 11, **dadurch gekennzeichnet, daß** das Widerlager (5) ein im Gehäuse geführtes Basisteil (27) aufweist, von dem aus sich auf der einen Seite ein hohlzylindrischer Teil (28) zur Aufnahme der Betätigungseinrichtung (3)und der Rückstellfeder (4) und auf der anderen Seite ein kolbenartiger Teil (29) erstreckt, der in einem hohlzylindrischen Teil (30) des Stufenkolbens (6) axial verschieblich geführt ist.

16. Vorrichtung nach Anspruch 15, **dadurch gekennzeichnet, daß** der kolbenartige Teil (29) des Widerlagers (5) hohlzylindrisch ausgebildet ist und daß ein kolbenförmiger Fortsatz (31) der Betätigungseinrichtung (3) in diesem hohlzylindrischen Teil (32) axial verschieblich geführt ist.

17. Vorrichtung nach Anspruch 16, **dadurch gekennzeichnet, daß** der hohlzylindrische Teil (30) des kolbenförmigen Teils (29) des Widerlagers (5) durch eine Wand (33) mit Drosselbohrung (34) unterteilt ist.

18. Vorrichtung nach Anspruch 17, **dadurch gekennzeichnet, daß** der hohlzylindrische Teil (30) des Kolbens (6) eine Drosselbohrung (35) aufweist.

19. Vorrichtung nach Anspruch 18, **dadurch gekennzeichnet, daß** im hohlzylindrischen Teil (30) des kolbenförmigen Teils (29) des Widerlagers (5) ein federbelastetes Schließglied (36) für die Drosselbohrung (34) in der Wand (33) vorgesehen ist, das durch eine zwischen Wand (33) und Ende des hohlzylindrischen Teils (30) im Kolben (6) eingespannte Feder (37) in Öffnungsstellung gehalten wird, solange zwischen Widerlager (5) und Stufenkolben (6) keine Relativbewegung stattfindet.

20. Vorrichtung nach Anspruch 10 oder 11, **dadurch gekennzeichnet, daß** im hohlzylindrischen Teil (32') des kolbenartigen Teils (29') des Widerlagers (5') ein Drosselglied (38) angeordnet ist, das in eine Bohrung (39) im kolbenförmigen Fortsatz (31') der Betätigungseinrichtung (3) eingreift, wobei die Bohrung (39) eine Drosselbohrung (40) aufweist, über die Druckmittel abfließen kann, wenn die Betätigungseinrichtung (3) relativ zum Widerlager (5) axial verschoben wird.

## Claims

1. Device for brake pressure control in hydraulic brake systems of vehicles, comprising
- a housing (1) accommodating an axially displaceable abutment (5, 5', 5") for a simulator spring (4) of an actuating device (3) that is mechanically coupled to a brake pedal (2), the said abutment in its initial position bearing against a stop (26) provided in the housing (1),
- a master brake cylinder (41) that has at least one brake piston (7, 8, 7', 8', 7", 8"),
- a pressure supply device (11) with a motor-driven pump (12), pressure reservoir (13) and control valve (14),
- an unpressurized supply reservoir (16) for the hydraulic pressure fluid including all necessary connecting lines, and
- an electric or electronic control device,
**characterized in that** the simulator spring (4) is arranged between the abutment (5, 5', 5") and the actuating device (3), there is provision of
- at least one measuring data emitter (17, 18) for the relative movement between the actuating device (3) and the abutment (5, 5', 5") and/or for the pedal force introduced into the simulator spring (4),
- one measuring data emitter (22) for the position of a brake piston (7, 8, 7', 8', 7", 8"), and one measuring data emitter (19, 20) for the pressure in the brake circuit or between the control valve (14) and the housing (1),
and **in that** the hydraulic pressure fluid which flows from the pressure supply device (11) via the control valve (14) is exclusively fed into a chamber (23) of the housing (1) where it urges the abutment (5, 5', 5") against the stop (26), on the one hand, and applies pressure to at least one brake piston (7, 8, 7', 8', 7", 8"), on the other hand.

2. Device as claimed in claim 1,
**characterized in that** there is further provision of a measuring data emitter (21) for the operating pressure of the pressure supply device (11).

3. Device as claimed in claim 1 or 2,
**characterized in that** the hydraulic pressure fluid is introduced in response to the travel signal of the measuring data emitter (22).

4. Device as claimed in claim 1 or 2,
**characterized in that** the hydraulic pressure fluid is introduced in response to a force signal.

5. Device as claimed in claim 1 or 2,
**characterized in that** the hydraulic pressure fluid is introduced in response to an electronic signal which is generated by an external distance sensor, a steering angle sensor, a transverse acceleration sensor, a yaw rate sensor, and/or another acceleration sensor.

6. Device as claimed in claim 1 or 2,
**characterized in that** the hydraulic pressure fluid is introduced in response to a combination of the signals mentioned in claims 3 to 5.

7. Device as claimed in any one of claims 1 to 6,
**characterized in that** there is further provision of a valve block (15) with a motor-driven pump (15a) to implement ABS, TCS or other functions.

8. Device as claimed in claim 7, however, under the proviso that the valve block (15) is designed without a motor-driven pump, and in that the pressure fluid necessary to realize the mentioned functions is made available by the pressure supply device (11) by way of valves (42, 43).

9. Device as claimed in any one of claims 1 to 8,
**characterized in that** the control valve (14) can be actuated by analog operation, and **in that** the control valve (14) is preceded by a two-way/two-position directional control valve (14a).

10. Device as claimed in any one of claims 1 to 9,
**characterized in that** a piston (6, 6') is arranged in the housing (1) between the abutment (5) and the brake piston (7, 8, 7', 8'), and **in that** a supply chamber (24) is designed between the piston (6, 6') and the brake piston (7, 8, 7', 8') and is connected to the unpressurized supply reservoir (16).

11. Device as claimed in claim 10,
**characterized in that** the brake piston is a tandem piston (7, 8, 7', 8').

12. Device as claimed in any one of claims 1 to 9,
**characterized in that** the chamber (23) of the housing (1) is defined axially by the abutment (5') and directly by at least one axially displaceable brake piston (7", 8"), the brake piston (7, 8') being adapted to be acted upon directly by the abutment (5) in the event of failure of the pressure supply device.

13. Device as claimed in claim 12,
**characterized in that** two brake pistons (7", 8") are arranged in parallel side by side.

14. Device as claimed in any one of claims 1 to 13,
**characterized in that** the abutment (5, 5', 5"), with the brake pedal (2) not applied, is urged to bear against a stop (26) on the housing by at least one resetting spring (9, 10, 9', 10', 9", 10") of the brake piston(s) (7, 8, 7', 8', 7", 8").

15. Device as claimed in claim 10 or 11,
**characterized in that** the abutment (5) includes a base part (27), guided in the housing, from which extends a hollow-cylindrical part (28) for the accommodation of the actuating device (3) and the resetting spring (4) on the one side and a piston-type part (29) on the other side, the latter part (29) being axially displaceably guided in a hollow-cylindrical part (30) of the stepped piston (6).

16. Device as claimed in claim 15,
**characterized in that** the piston-type part (29) of the abutment (5) has a hollow-cylindrical configuration, and **in that** a piston-shaped extension (31) of the actuating device (3) is axially displaceably guided in this hollow-cylindrical part (32).

17. Device as claimed in claim 16,
**characterized in that** the hollow-cylindrical part (30) of the piston-shaped part (29) of the abutment (5) is subdivided by a wall (33) with a throttle bore (34).

18. Device as claimed in claim 17,
**characterized in that** the hollow-cylindrical part (30) of the piston (3) includes a throttle bore (35).

19. Device as claimed in claim 18,
**characterized in that** the hollow-cylindrical part (30) of the piston-shaped part (29) of the abutment (5) accommodates a spring-loaded closure member (36) for the throttle bore (34) in the wall (33) which is maintained in its open position by a spring (37) compressed in the piston (6) between the wall (33) and the end of the hollow-cylindrical part (30) as long as there is no relative movement between the abutment (5) and the stepped piston (6).

20. Device as claimed in claim 10 or 11,
**characterized in that** the hollow-cylindrical part (32') of the piston-type part (29') of the abutment (5') accommodates a throttle member (38) which extends into a bore (39) in the piston-shaped extension (31') of the actuating device (3), the said bore (39) including a throttle bore (40) through which pressure fluid can discharge when the actuating device (3) is displaced axially in relation to the abutment (5).

## Revendications

1. Dispositif de régulation de pression de freinage dans des dispositifs de freinage hydraulique de véhicules, comprenant
- un boîtier (1), dans lequel est disposé un contre-appui (5, 5', 5"), mobile en translation axiale, pour un ressort simulateur (4) d'un dispositif d'actionnement (3) accouplé mécaniquement à une pédale de frein (2), lequel contre-appui, dans sa position initiale, est en appui sur une butée (26) réalisée dans le boîtier (1),
- un maître-cylindre de frein (41) comportant au moins un piston de frein (7, 8, 7', 8', 7", 8"),
- un dispositif de fourniture de pression (11) comportant une pompe (12) entraînée par moteur, un accumulateur de pression (13) et une valve de commande (14),
- un réservoir sans pression (16) pour l'agent de pression hydraulique, y compris toutes les lignes de liaison nécessaires, et
- un dispositif de régulation électrique ou électronique,
**caractérisé**
- **en ce que** le ressort simulateur (4) est disposé entre le contre-appui (5, 5 ', 5") et le dispositif d'actionnement (3),
- **en ce qu'**il est prévu, pour chacun des éléments suivants, un capteur de valeur de mesure
(17, 18) pour le mouvement relatif entre le dispositif d'actionnements (3) et le contre-appui (5, 5', 5") et/ou pour la force de pédale introduite dans le ressort simulateur (4),
(22) pour la position d'un piston de frein (7, 8, 7', 8', 7", 8") et
(19, 20) pour la pression dans le circuit de frein entre la valve de commande (14) et le boîtier (1) et
- **en ce que** l'agent de pression hydraulique s'écoulant à partir du dispositif de fourniture de pression (11) par l'intermédiaire de la valve de commande (14) est fourni exclusivement dans une chambre (23) du boîtier (1) où, d'une part, il applique sous pression le contre-appui (5, 5', 5") en appui sur la butée (26) et, d'autre part, il soumet à une pression au moins un piston de frein (7, 8, 7', 8', 7", 8").

2. Dispositif suivant la revendication 1, **caractérisé en ce qu'**il est en outre prévu un capteur de valeur de mesure (21) pour la pression de fonctionnement du dispositif de fourniture de pression (11).

3. Dispositif suivant la revendication 1 ou 2, **caractérisé en ce que** l'agent de pression hydraulique est fourni en fonction du signal de course du capteur de valeur de mesure (22).

4. Dispositif suivant la revendication 1 ou 2, **caractérisé en ce que** l'agent de pression hydraulique est fourni en fonction d'un signal de force.

5. Dispositif suivant la revendication 1 ou 2, **caractérisé en ce que** l'agent de pression hydraulique est fourni en fonction d'un signal électronique qui est produit par un capteur extérieur de distance, un capteur d'angle de braquage, un capteur d'accélération transversale, un capteur de vitesse de lacet et/ou un autre capteur d'accélération.

6. Dispositif suivant l'une des revendications 1 ou 2, **caractérisé en ce que** l'agent de pression hydraulique est fourni en fonction d'une cambinaison des signaux indiqués aux revendications 3 à 5.

7. Dispositif suivant l'une des revendications 1 à 6, **caractérisé en ce qu'**il est en outre prévu un bloc de valve (15) comportant une pompe (15a) entraînée par moteur servant à la réalisation de fonctions ABS, ASR ou autres.

8. Dispositif suivant la revendication 7, mais comportant par contre la disposition prévoyant que le bloc de valve (15) est réalisé sans pompe entraînée par moteur et dans ce que l'agent de pression nécessaire à la réalisation des fonctions indiquées est tenu à disposition par le dispositif de fourniture de pression (11) par l'intermédiaire de valves (42, 43).

9. Dispositif suivant l'une des revendications 1 à 8, **caractérisé en ce que** la valve de commande (14) peut être commandée d'une manière analogique et **en ce qu'**une valve à 2 voies/2 positions (14a) est disposée en amont de la valve de commande (14).

10. Dispositif suivant l'une des revendications 1 à 9, **caractérisé en ce qu'**un piston (6, 6') est disposé dans le boîtier (1) entre le contre-appui (5) et le piston de frein (7, 8, 7', 8') et **en ce qu'**entre le piston (6, 6') et le piston de frein (7, 8, 7', 8'), il est réalisé une chambre de compensation (24) qui communique avec le réservoir sans pression (16).

11. Dispositif suivant la revendication 10, **caractérisé en ce que** le piston de frein est un piston tandem (7, 8, 7', 8').

12. Dispositif suivant l'une des revendications 1 à 9, **caractérisé en ce que** la chambre (23) du boîtier (1) est délimitée axialement par le contre-appui (5") et directement par au moins un piston de frein (7", 8") mobile axialement en translation, le piston de frein (7", 8") pouvant être soumis à une sollicitation directement par le contre-appui (5") en cas de défaillance du dispositif de fourniture de pression.

13. Dispositif suivant la revendication 12, **caractérisé en ce que** deux pistons de frein (7", 8") sont disposés parallèlement l'un à côté de l'autre.

14. Dispositif suivant l'une des revendications 1 à 13, **caractérisé en ce que**, lorsque la pédale de frein (2) n'est pas actionnée, le contre-appui (5, 5', 5") est appliqué sous pression, par au moins un ressort de rappel (9, 10, 9', 10', 9", 10") du ou des pistons de frein (7, 8, 7', 8', 7", 8"), en appui sur une butée (26) fixe par rapport au boîtier.

15. Dispositif suivant la revendication 10 ou 11, **caractérisé en ce que** le contre-appui (5) comporte une partie de base (27), guidée dans le boîtier, à partir de laquelle s'étend, d'un premier côté, une partie cylindrique creuse (28) servant à loger le dispositif d'actionnement (3) et le ressort de rappel (4) et, de l'autre côté, une partie en forme de piston (29) qui est guidée en translation axiale dans une partie cylindrique creuse (30) du piston étagé (6).

16. Dispositif suivant la revendication 15, **caractérisé en ce que** la partie en forme de piston (29) du contre-appui (5) a une réalisation cylindrique creuse et **en ce qu'**une partie de prolongement en forme de piston (31) du dispositif d'actionnement (3) est guidée en translation axiale dans cette partie cylindrique creuse (32).

17. Dispositif suivant la revendication 16, **caractérisé en ce que** la partie cylindrique creuse (32) de la partie en forme de piston (29) du contre-appui (5) est divisée par une cloison (33) comportant un perçage d'étranglement (34).

18. Dispositif suivant la revendication 17, **caractérisé en ce que** la partie cylindrique creuse (30) du piston (6) comporte un perçage d'étranglement (35).

19. Dispositif suivant la revendication 18, **caractérisé en ce que**, dans la partie cylindrique creuse (32) de la partie en forme de piston (29) du contre-appui (5), il est prévu un élément obturateur (36) à ressort, pour le perçage d'étranglement (34) de la cloison (33), lequel élément est maintenu en position d'ouverture par un ressort (37) serré sous contrainte entre la cloison (33) et l'extrémité de la partie cylindrique creuse (30) du piston (6), aussi longtemps qu'aucun déplacement relatif n'a lieu entre le contre-appui (5) et le piston étagé (6).

20. Dispositif suivant la revendication 10 ou 11, **caractérisé en ce que**, dans la partie cylindrique creuse (32') de la partie en forme de piston (29') du contre-appui (5'), il est disposé un élément d'étranglement (38) qui s'emboîte dans un alésage (39) situé dans la partie de prolongement en forme de piston (31') du dispositif d'actionnement (3), l'alésage (39) comportant un perçage d'étranglement (40) par lequel l'agent de pression peut s'évacuer lorsque le dispositif d'actionnement (3) est déplacé en translation axiale par rapport au contre-appui (5).
